# EUROPEAN PATENT SPECIFICATION

(11) **EP 2 883 804 B1**
(45) Date of publication and mention of the grant of the patent: **03.08.2016**
(21) Application number: 13196772.1
(22) Date of filing: 11.12.2013
(51) Int. Cl.: B65C 3/06, B29C 63/42

(54) **A labelling unit for applying a label onto an article**
Etikettiereinheit zum Anbringen eines Etiketts auf einen Artikel
Unité d'étiquetage pour appliquer une étiquette sur un article

(43) Date of publication of application: 17.06.2015
(73) Proprietor: Sidel S.p.a. Con Socio Unico, Parma (IT)
(72) Inventor: Deflorian, Antonio, 43100 PARMA (IT)
(74) Representative: D'Angelo, Fabio

(56) References cited:
- EP-A1- 0 990 588
- WO-A1-2010/040397
- WO-A1-2011/077465
- WO-A1-2012/107123
- NL-A- 8 303 204
- US-A- 5 486 253

## Description

The present invention relates to a labelling unit of the kind described in the preamble of claim 1, for applying a label, in particular made of heat-shrinking film, on an article, such as a bottle or a generic container.

More specifically, the present invention relates to a labelling unit adapted to apply labels onto bottles or containers having non-circular cross-sections along planes orthogonal to their axes.

In greater details, the present invention relates to a labelling unit adapted to apply labels onto bottles or containers having oval cross-sections along planes orthogonal to their axes, which the following description will refer to, although this is in no way intended to limit the scope of protection as defined by the accompanying claims.

As it is generally known, the same type of labelling machine is currently used to apply tubular labels - commonly called "sleeve labels" - to containers or articles having circular or oval cross-sections along planes orthogonal to their axes.

These tubular labels are typically obtained by:
- cutting the web unwound from a supply roll into a plurality of rectangular or square labels;
- bending each label in a cylindrical configuration such that the opposite vertical edges overlap one another; and
- welding the overlapped edges of each cylindrical label.

All these operations are normally performed on the labelling machine, which also produces insertion of containers into the so formed tubular labels.

A heat-shrinking step is then performed on the containers exiting from the labelling machine to obtain shrinking and adhesion of the label to the container external surface, being this surface cylindrical or annular with an oval cross-section along a plane orthogonal to its axis.

The labelling machine basically comprises a carousel rotating about a vertical axis to define a circular path, along which it receives a succession of unlabelled containers and, then, a succession of rectangular or square labels from respective input wheels, produces application of the labels in a tubular configuration onto the respective containers and releases the labelled containers to an output wheel.

More specifically, the carousel comprises a number of labelling units which are equally spaced about the rotation axis, are mounted along a peripheral edge of the carousel and are moved by the latter along the above-mentioned circular path.

Each labelling unit comprises a bottom supporting assembly adapted to support the bottom wall of a relative container and an upper retainer adapted to cooperate with the top portion of such container to hold it in a vertical position during the rotation of the carousel about the vertical axis.

Each supporting assembly comprises a vertical hollow supporting mount, secured to a horizontal plane of a rotary frame of the carousel, and a cylindrical receiving member, engaging the supporting mount in sliding and rotating manner with respect to its axis, and adapted to carry a relative container on its top surface and a relative label on its lateral surface.

Each receiving member can be displaced between a raised position and a fully retracted position within the relative supporting mount.

In the raised position, each receiving member protrudes from a top surface of the relative supporting mount and is adapted to receive a relative label on its lateral surface from the label input wheel; in particular the label is wrapped around the receiving member such that the opposite vertical edges of the label overlap one another.

In order to produce this complete wrapping, the receiving member is rotated about its axis during the transfer of the label from the label input wheel.

In the fully retracted position, which is reached at the container input and output wheels, the top surface of each receiving member is flush with the top surface of the supporting mount so that containers are transferred onto and from the carousel along the same transfer plane.

After the welding of the overlapped edges of a tubular label, the displacement of the relative receiving member from the raised position to the fully retracted position produces the insertion of the relative container inside the label, making the so obtained container ready to be transferred to the output wheel.

Each label is retained on the lateral surface of the relative receiving member by suction; in particular, at least a region of the lateral surface of each receiving member is provided with a plurality of holes in turn connected to a pneumatic suction device.

In a completely analogous manner, each label is retained by suction on the label input wheel; during the transfer of the label from the label input wheel to the respective receiving member, suction is progressively cut on the label input wheel so that the label can be progressively released by the label input wheel and retained by suction on the receiving member. This passage is quite critical as it should be performed by minimizing the possible tensions on the label while ensuring, at the same time, that a high retention force is exerted by the receiving member on the label to detach it from the label input wheel. An insufficient retention force exerted by each receiving member on the respective label during transfer may result in an undesired displacement thereof with a consequent incorrect positioning of the label on the article to be labeled.

This problem is particularly felt in the case in which the label has to be applied on a container having a label receiving portion with oval cross-sections along planes orthogonal to its axis.

In addition, in this latter case, the cylindrical receiving member used on the labelling machine for wrapping the label in the tubular configuration must necessarily have a circular profile circumscribing the largest oval cross-section of the container. The following heat-shrinking step performed on the tubular label leads this label to take the external profile of the label receiving portion of the container.

However, by using this kind of technique, a considerable waste of material occurs, due to the fact that the label should have a sufficient size to be wrapped along a cylinder circumscribing the largest oval cross-section of the container.

In addition, the quality of the print - images or words - on the label may be negatively affected by the heat-shrinking step in the zones where the requested shrinkage is particularly high.

A labelling unit in accordance with the preamble of claim 1 is disclosed in WO 2011/077465 A1.

It is an object of the present invention to provide a labelling unit, which allows to overcome at least one of the above drawbacks in a straightforward and low-cost manner.

This object is achieved by a labelling unit as claimed in claim 1.

A non-limiting embodiment of the present invention will be described by way of example with reference to the accompanying drawings, in which:
Figure 1 shows a schematic top plan view, with parts removed for clarity, of a labelling machine provided with a plurality of labelling units in accordance with the teachings of the present invention;
Figure 2 shows a larger-scale top plan view of a part of the labelling machine of Figure 1, in proximity of a label transfer station;
Figure 3 shows a larger-scale view in perspective, with parts removed for clarity, of a labelling unit according to the present invention;
Figure 4 shows a larger-scale view in perspective, with parts removed for clarity, of a part of the labelling unit of Figure 3;
Figure 5 shows a larger-scale section along line V-V in Figure 3, with parts removed for clarity; and
Figures 6 to 9 show larger-scale top plan views of the labelling unit of Figure 3 in different operating conditions.

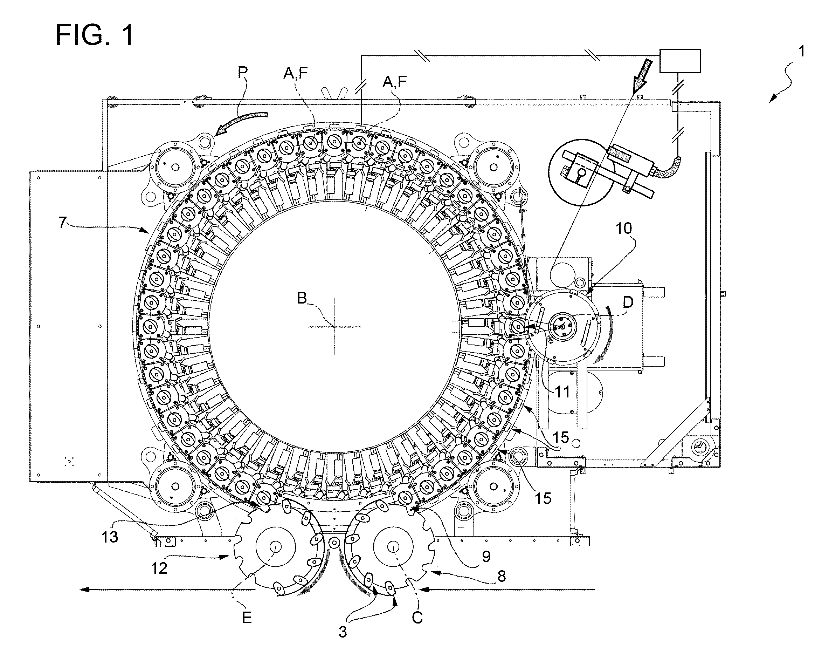

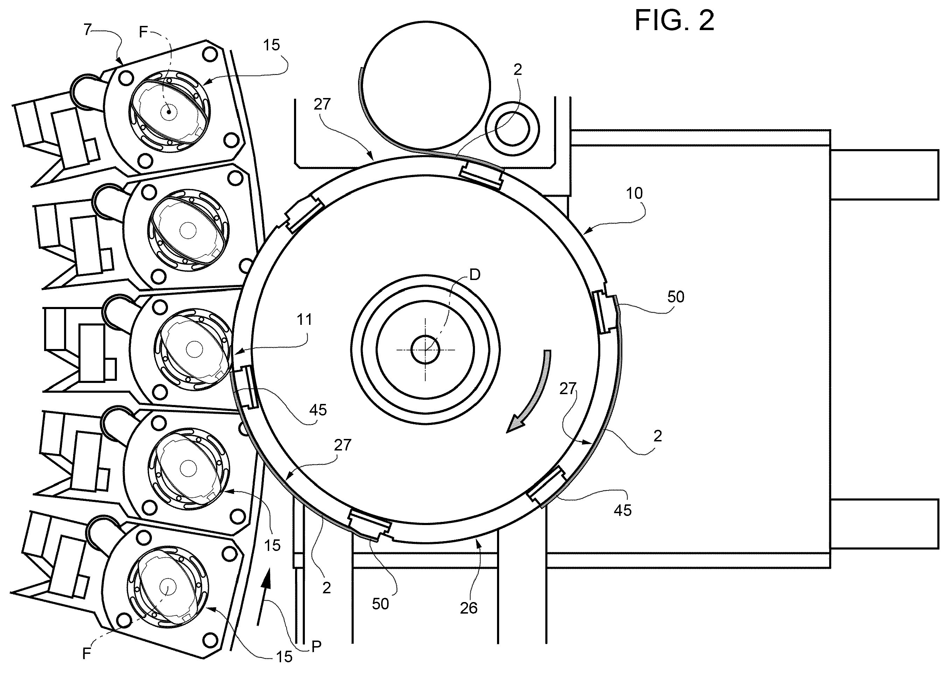

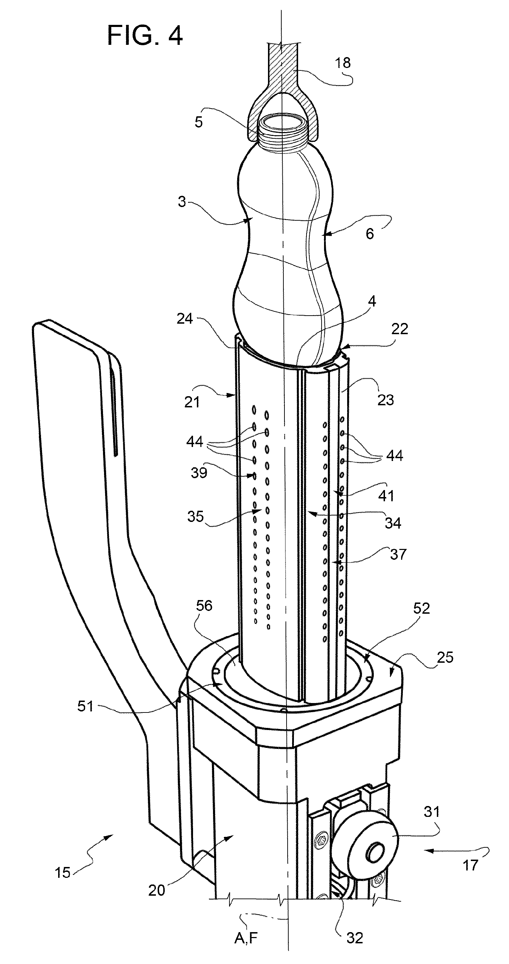

Number 1 in Figure 1 indicates as a whole a labelling machine for applying labels 2 (Figures 2 and 6 to 9) to respective articles or more specifically containers, particularly bottles 3, each of which (Figures 1 and 4) has a given longitudinal axis A, is bonded at the bottom by a bottom wall 4 substantially perpendicular to axis A, and has a top neck 5 substantially coaxial with axis A.

Labelling machine 1 is in particular designed to apply a label 2 to a container or bottle 3 provided with a label receiving region 6 having an endless configuration about axis A and oval cross-sections along planes orthogonal to the axis A itself.

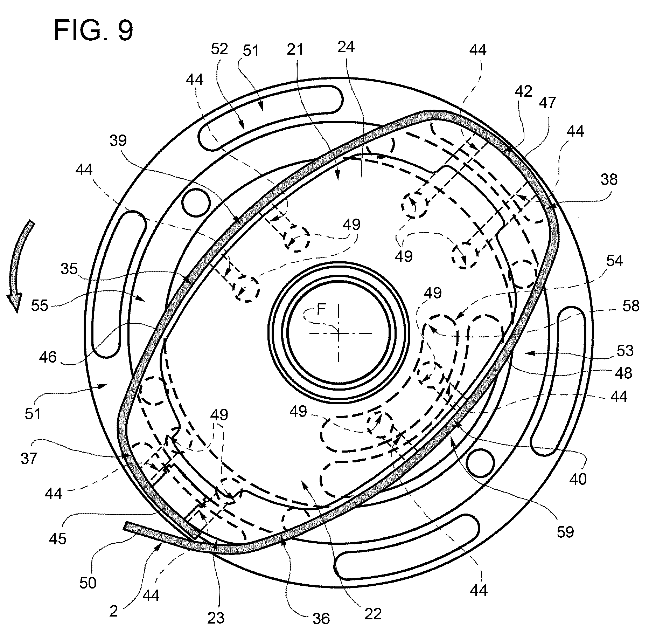

Machine 1 comprises a conveying device that serves to bend and weld labels 2 in a sleeve-like or endless configuration (Figures 2 and 9) and to produce insertion of bottles 3 into the so formed endless labels 2, while the labels 2 and the bottles 3 are continuously advanced.

In the preferred embodiment as illustrated in the Figures 1 and 2, the conveying device comprises a carousel 7, which is mounted to rotate continuously (anticlockwise in Figure 1) about a vertical axis B perpendicular to the Figure 1 plane.

The carousel 7 receives a succession of unlabelled bottles 3 from an input wheel 8, which cooperates with carousel 7 at a first transfer station 9 and is mounted to rotate continuously about a respective longitudinal axis C parallel to axis B.

The carousel 7 also receives a succession of rectangular or square labels 2 from an input drum 10, which cooperates with carousel 7 at a second transfer station 11 and is mounted to rotate continuously about a respective longitudinal axis D parallel to axes B and C.

The carousel 7 releases a succession of labelled bottles 3 to an output wheel 12, which cooperates with carousel 7 at a third transfer station 13 and is mounted to rotate continuously about a respective longitudinal axis E parallel to axes B, C and D.

The carousel 7 comprises a number of labelling units 15, which are equally spaced about axis B, are mounted along a peripheral edge of carousel 7, and are moved by carousel 7 along a circular path P extending about axis B and through transfer stations 9, 11 and 13.

As shown in Figure 1, transfer station 11 is arranged, along path P, downstream from transfer station 9 and upstream from transfer station 13.

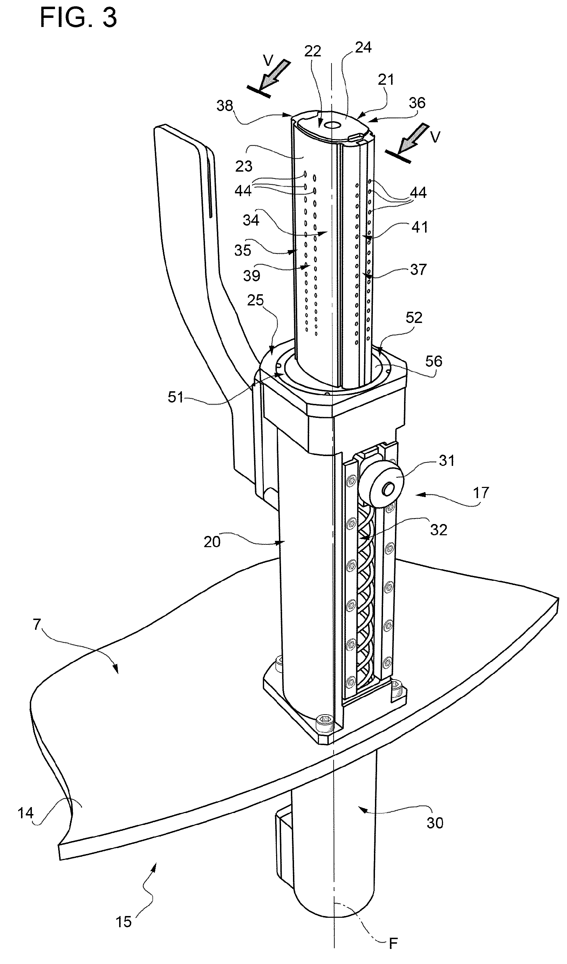

With reference to Figures 3 to 9, labelling units 15 are secured to a horizontal rotary table 14 of carousel 7, have respective axes F parallel to axes B, C, D, E and extend coaxially through respective holes (not shown) of the rotary table 14 and on both sides of such table.

Each labelling unit 15 is adapted to receive a relative bottle 3 from input wheel 8 in a vertical position, i.e. coaxially with the relative axis F (see in particular Figure 4), and to hold said bottle 3 in such position along path P from transfer station 9 to transfer station 13.

Labelling units 15 being identical to each other, only one is described below for the sake of simplicity and clarity; it is clear that the features described hereafter are common to all labelling units 15.

In particular, labelling unit 15 comprises, above rotary table 14 of carousel 7, a supporting assembly 17 adapted to support the bottom wall 4 of a relative bottle 3 and an upper retainer 18 (Figure 4) adapted to cooperate with the top neck 5 of the bottle 3.

In particular, supporting assembly 17 comprises:
- a hollow supporting mount 20 of axis F, which is secured to a top surface of rotary table 14 around the relative hole thereof; and
- a hollow receiving member 21 coupled to the supporting mount 20 in a translational and rotational manner with respect to axis F, and adapted to carry coaxially a relative bottle 3 on its top end 22 and a relative label 2 on the outer surface of its lateral wall 23.

More specifically, the bottle 3 rests on a support plate 24, which is carried by top end 22 of receiving member 21 through the interposition of a relative bearing (not visible), so as to be angularly free from receiving member 21; in this way, rotational movements of receiving member 21 around axis F are not transmitted to the bottle 3.

Receiving member 21 can be moved along axis F between a fully retracted position within the relative supporting mount 20 and a raised position (Figures 3 to 9).

In the fully retracted position, receiving member 21 is completely housed within the relative supporting mount 20 so that support plate 24 is flush with a top surface 25 of the supporting mount 20.

In the raised position, receiving member 21 protrudes from the top surface 25 of the supporting mount 20 and is adapted to receive, on the outer surface of its lateral wall 23, a relative label 2 from input drum 10.

More specifically, labels 2 are cut in a know manner from a web (not shown) and fed to input drum 10 to be then transferred to the respective receiving members 21 in the raised position.

As shown in Figure 2, the cut labels 2 are retained on a lateral surface 26 of input drum 10 by suction; in fact, the lateral surface 26 of input drum 10 is divided into a given number, three in the embodiment shown, of suction regions 27, which are equally spaced about axis D, are each provided with a plurality of through holes (known per se and not shown) connected to a pneumatic suction device (known per se and not shown) and are adapted to cooperate with respective labels 2.

In a completely analogous manner and as it will be described hereafter in greater details (Figures 3 and 4), lateral wall 23 of receiving member 21 is adapted to retain a corresponding label 2 on its outer surface by suction.

At the transfer station 11, receiving member 21 can be rotated about the relative axis F in order to produce the complete wrapping of the respective label 2, coming from input drum 10, on the outer surface of its lateral wall 23. In particular, each label 2, fed by input drum 10, is wrapped around the corresponding receiving member 21 in the raised position so as to form a sleeve or an endless sheet.

As it appears from above, receiving member 21, during its travel along path P with the other components of labelling unit 15, is subjected to distinct movements in different operative steps of the labelling machine 1:
- a displacement along axis F from the fully retracted position to the raised position, after a bottle 3 has been transferred to labelling unit 15;
- a rotational movement about axis F to receive a relative label 2 from input drum 10 and to allow bending of such label in an endless or sleeve configuration; and
- a displacement from the raised position to the fully retracted position to allow insertion of the bottle 3 within the label 2 welded in the endless or sleeve configuration.

The rotational movement is obtained by means of an actuator assembly 30 (known per se and only schematically shown in Figure 3) arranged underneath rotary table 14 and secured to a bottom surface of the rotary table 14 itself.

Actuator assembly 30 comprises a driving shaft (not shown) extending coaxially through supporting mount 20 and rotationally coupled to receiving member 21.

The translational displacements along axis F are instead obtained by cooperation of a fixed cam (known per se and not shown) extending along path P and a cam follower 31 coupled to receiving member 21 and protruding radially outwards from a vertical through slot 32 of supporting mount 20, i.e. from a slot extending parallel to axis F.

With reference to Figures 2 to 4 and 6 to 9, lateral wall 23 of receiving member 21 defines a label receiving portion 34 having an oval section along a plane orthogonal to axis F.

In particular, label receiving portion 34 comprises a pair of opposite side portions 35, 36, both having curved and convex shapes, and a pair of opposite edge portions 37, 38, also having curved and convex shapes and connecting side portions 35, 36 to one another; edge portions 37, 38 have smaller angular extensions around axis F than side portions 35, 36.

As visible in particular in Figures 3 and 4, portions 35, 36, 37, 38 of lateral wall 23 of receiving member 21 are provided with respective suction regions 39, 40, 41, 42 equally spaced angularly from one another with respect to axis F; in the example shown in Figures 3 and 4, each suction region 39, 40, 41, 42 extends along the most part of the height of receiving member 21 and includes two vertical rows of suction holes 44.

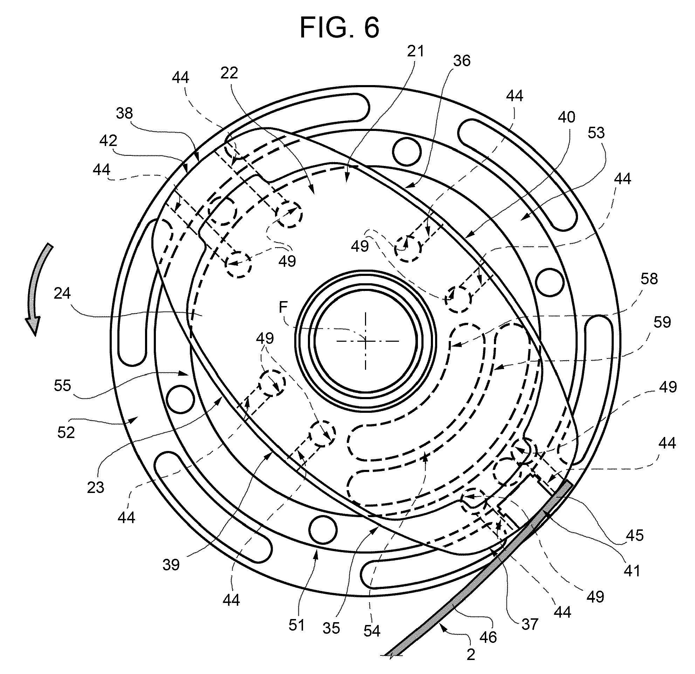

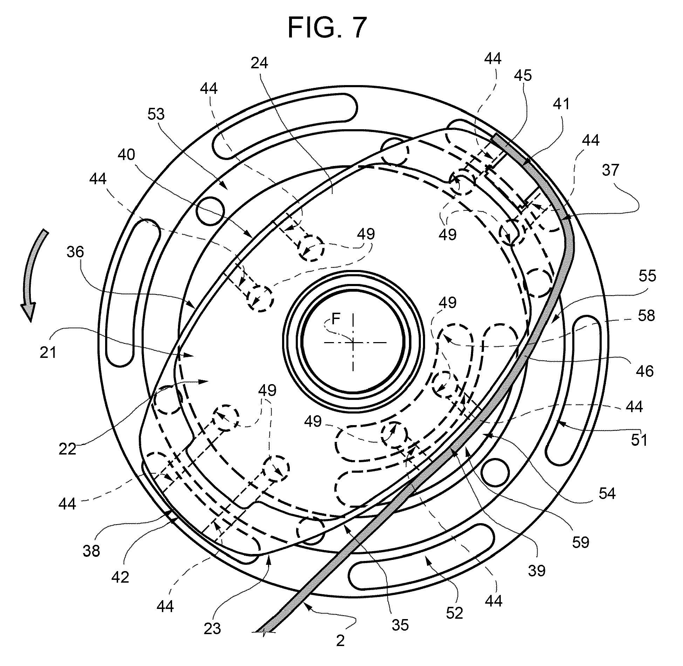

Suction region 41 is designed to cooperate in use with a leading edge 45 of label 2 (see Figure 6), whilst the other suction regions 39, 42 and 40 are designed to respectively cooperate with corresponding next portions 46, 47, 48 of the label 2 as they progressively adhere to lateral wall 23 of receiving member 21 during transfer of such label 2 from input drum 10 (see Figures 7 to 9). At the end of the transfer, trailing edge 50 of label 2 is overlapped to leading edge 45 so that these opposite edges 45, 50 can be welded together to define the endless configuration of the label 2.

As visible in greater details in Figures 6 to 9, portion 46 of label 2 is adjacent to leading edge 45, portion 47 is adjacent to portion 46 and portion 48 is adjacent, on one side, to portion 47 and, on the opposite side, to trailing edge 50.

All suction regions 39, 40, 41, 42 of receiving member 21 are supplied in use by the same suction source (not shown).

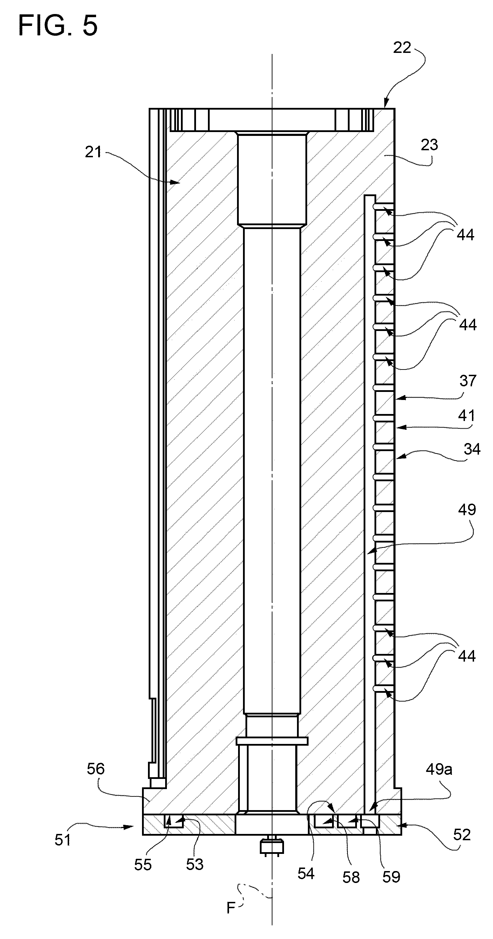

As visible in Figures 5 to 9, the holes 44 of each suction region 39, 40, 41, 42 are connected to a pair of vertical ducts 49 - one duct 49 for each row of holes 44 - extending through the body of lateral wall 23 of receiving member 21 in a direction parallel to axis F and open at the bottom of the receiving member 21 to define respective inlet mouths 49a (Figure 5).

With reference to Figures 3 to 9, labelling unit 15 advantageously comprises control means 51 to activate suction region 41 prior to suction regions 39, 40, 42 during wrapping of label 2 around receiving member 21 so as to maximize the retention force on leading edge 45 of the label 2 at the beginning of the transfer of the latter onto receiving member 21.

In particular, control means 51 comprise a vacuum distribution member 52 connected to the suction source, carried by supporting mount 20 in a fixed angular position with respect to axis F and in turn including:
- first supplying means 53 connected to suction region 41 of edge portion 37 of receiving member 21 in any angular position of the receiving member 21 about axis F; and
- second supplying means 54 progressively and selectively connected in use to suction regions 39, 42, 40 of portions 35, 38, 36 of receiving member 21 as a result of the rotation of the receiving member 21 about axis F and with respect to the distribution member 52, starting from a condition in which the leading edge 45 of the label 2 has completed its adhesion onto the edge portion 37.

Distribution member 52 is arranged at the base of receiving member 21 in a position interposed between the latter and supporting mount 20 and has a cylindrical configuration so that it can slide within the supporting mount 20 along axis F.

Receiving member 21 is angularly movable with respect to distribution member 52 about axis F and is displaceable together with the distribution member 52 along the axis F itself.

In the example shown in Figures 5 to 9, supplying means 53 comprise one annular outlet groove 55 provided on top of distribution member 52 and coaxial with axis F; the inlet mouths 49a of ducts 49 of suction region 41 move along and above annular outlet groove 55 during rotation of the receiving member 21 about axis F; in this way, a continuous connection is established between supplying means 53 of distribution member 52 and suction region 41 of receiving member 21 during rotation of the latter about axis F.

It should be noted that, at its bottom end, receiving member 21 is provided with a radially protruding annular flange 56 covering in use the top of distribution member 52 and angularly movable with the receiving member 21 about axis F.

Supplying means 54 comprise one or more arc-shaped outlet grooves, two in the example shown, indicated respectively with references 58, 59, which are provided on top of distribution member 52 and have angular extensions about axis F smaller than that of outlet groove 55. In particular, arc-shaped outlet groove 58 is radially inner than outlet groove 59, in turn radially inner than annular groove 55. More specifically, both arc-shaped grooves 58, 59 have angular extensions smaller than 180° about axis F; in addition, the radially inner arc-shaped groove 58 has an angular size smaller than that of arc-shaped groove 59.

During wrapping of label 2 around receiving member 21, the inlet mouths 49a of ducts 49 of suction region 39 move along and above arc-shaped groove 58 as the suction region 39 respectively cooperates with portion 46 of the label 2 (see Figure 7).

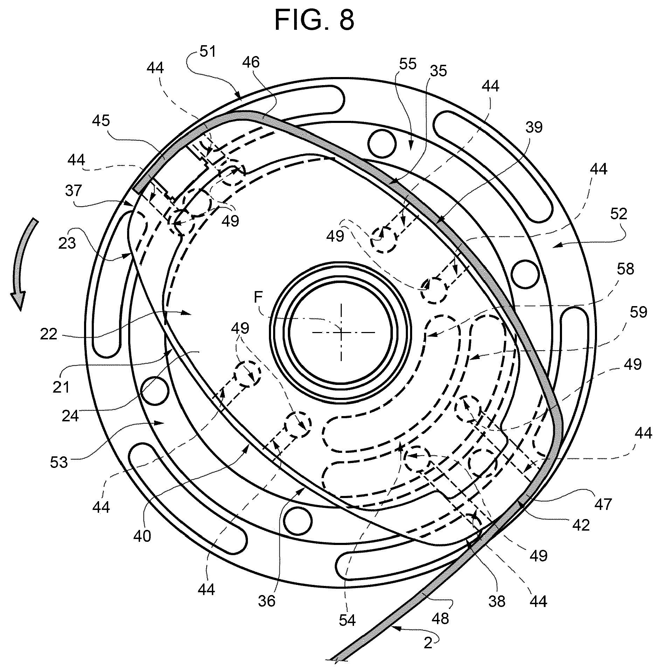

In a completely analogous manner, by proceeding with the wrapping of label 2 around receiving member 21, the inlet mouths 49a of ducts 49 of suction region 42 move along and above arc-shaped groove 59 as the suction region 42 respectively cooperates with portion 47 of the label 2 (see Figure 8).

During the final stage of the wrapping of label 2 around receiving member 21, the inlet mouths 49a of ducts 49 of suction region 40 move along and above arc-shaped groove 58 as the suction region 40 respectively cooperates with portion 48 of the label 2 (see Figure 9).

In practice, suction regions 39, 42, 40 are progressively and selectively activated as they cooperate with corresponding portions 46, 47, 48 of label 2 during wrapping thereof around receiving member 21.

It is also pointed out that, in a preferred embodiment of the present invention, each suction region 39, 42, 40 is deactivated as the next suction region 42, 40, 41 in the wrapping direction of label 2 about axis F starts to cooperate with the corresponding portion 47, 48, 50 of the label 2. In other words, during the wrapping operation, suction region 39 is deactivated as the next suction region 42 starts to cooperate with the corresponding portion 47 of the label 2; in a similar way, suction region 42 is deactivated as the next suction region 40 starts to cooperate with the corresponding portion 48 of the label 2; and finally, suction region 40 is deactivated as the next suction region 41 starts to cooperate with the trailing edge 50 of the label 2.

Operation of labelling machine 1 will now be described with reference to the labelling of one bottle 3, and therefore to one labelling unit 15, and as of the instant in which the receiving member 21 of such labelling unit 15 is in the fully retracted position within the relative supporting mount 20 and has just received the unlabelled bottle 3 from input wheel 8.

In this condition, the bottle 3, which rests on plate 24 carried by the receiving member 21, is hold in the vertical position by the combined action of the receiving member 21 and the respective upper retainer 18 (Figure 4).

During the subsequent movement of unit 15 along path P, interaction of cam follower 31 with the fixed cam (not shown) extending along path P produces in a known manner a translational movement of the receiving member 21 along axis F towards the desired raised position (Figures 3 to 9).

At the transfer station 11, the input drum 10 reaches an angular position around axis D adapted to put the label 2 into contact with the receiving member 21 passing through such station; in this condition, a pure rotational movement of receiving member 21 around axis F is required to produce complete wrapping of the label 2 in a known manner around such receiving member 21 (Figures 6 to 9).

In particular, as the leading edge 45 of the label 2 cooperates with edge portion 37 of lateral wall 23 of receiving member 21, the corresponding suction region 41, which is the only one active in this stage, exerts a retaining force on such leading edge 45 so as to maintain it in contact with the receiving member 21 (see Figure 6). In particular, during this step, the inlet mouths 49a of suction region 41 move along and above annular outlet groove 55 of distributor member 52 so as to maintain the holes 44 of such suction region 41 continuously supplied by the suction source; the outlet grooves 58, 59 of distributor member 52 are instead not connected to the other suction regions 39, 40 and 42.

Once leading edge 45 of label 2 has completed its adhesion to edge portion 37, the subsequent rotation of receiving member 21 about axis F with respect to distributor member 52 carries the inlet mouths 49a of the next suction region 39 to move along and above arc-shaped groove 58 (see Figure 7); in this way, suction region 39 is activated to retain portion 46 of label 2 onto side portion 35 of receiving member 21.

Once portion 46 of label 2 also has completed its adhesion to side portion 35, the subsequent rotation of receiving member 21 about axis F with respect to distributor member 52 carries the inlet mouths 49a of the next suction region 42 to move along and above arc-shaped groove 59 (figure 8); in this way, suction region 42 is activated to retain portion 47 of label 2 onto edge portion 38 of receiving member 21. In the meantime, the rotational displacement of receiving member 21 about axis F to produce activation of suction region 42 also causes deactivation of suction region 39, since the corresponding inlet mouths 49a of this latter suction region are angularly spaced from both arc-shaped outlet grooves 58, 49.

Once portion 47 of label 2 also has completed its adhesion to edge portion 38, the subsequent rotation of receiving member 21 about axis F with respect to distributor member 52 carries the inlet mouths 49a of the next suction region 40 to move along and above arc-shaped groove 58 (figure 9); in this way, suction region 40 is activated to retain portion 48 of label 2 onto side portion 36 of receiving member 21. In the meantime, the rotational displacement of receiving member 21 about axis F to produce activation of suction region 40 also causes deactivation of suction region 42, since the corresponding inlet mouths 49a of this latter suction region are angularly spaced from both arc-shaped outlet grooves 58, 49.

At the end of rotation of receiving member 21 about axis F, the label 2 reaches an endless or sleeve-like configuration with the opposite vertical edges 45, 50 overlapped one another.

At this point, the label 2 is ready to be welded along the edges 45, 50.

During the last part of the path P, the receiving member 21, together with distributor member 52, must be returned to the fully retracted position within the relative supporting mount 20, so as to produce the insertion of the bottle 3 inside the so formed endless label 2.

A heat-shrinking step (not shown) can be then performed on the bottles 3 exiting from carousel 7 to obtain shrinking and adhesion of the label 2 to the bottle external surface.

The advantages of the labelling machine 1 and labelling units 15 according to the present invention will be clear from the above description.

Thanks to the fact that the suction region 41 of receiving member 21, designed to receive the leading edge 45 of label 2, is activated before the other suction regions 39, 40, 42 during the transfer of the label 2 from input drum 10 to labelling unit 15, the retention force on such leading edge can be maximized, so avoiding undesired displacements of the label 2 with respect to the receiving member 21.

This maximization of the retention force on the leading edge 45 of the label 2 is particularly useful when such label 2 is applied to non-cylindrical receiving members, such as the receiving member 21 having an oval cross-section orthogonally to its axis F. In this way, in fact, the high retention force on the leading edge 45 of the label 2 permits the latter to withstand the tensions and stresses caused by non-constant peripheral speed of the non-cylindrical receiving member during its rotation about its axis to produce wrapping of the label; in addition, further tensions and stresses may be produced on each label 2 by the fact that the non-cylindrical receiving member does not have a constant distance from the input drum 10 during its rotation about its axis.

The applicant has also observed that this new concept of differentiated activations of the suction regions may be also advantageously applied to cylindrical receiving members, in solutions in which the forces required to detach the labels from the input drum are particularly high.

Plus, the adoption of a receiving member 21 having an oval cross-section orthogonally to its axis F, corresponding to the largest oval cross-section of the bottle 3 to be labeled, permits to limit drastically the amount of plastic material used for each label 2.

Furthermore, the shrinkage applied to the label 2 to adhere to the label receiving portion 34 of the bottle 3 is very limited, with no negative consequence on the quality of the print present on the label 2.

Clearly, changes may be made to labelling machine 1 and labelling units 15 as described and illustrated herein without, however, departing from the scope of protection as defined in the accompanying claims.

## Claims

1. A labelling unit (15) for applying a label (2) onto an article (3); said labelling unit (15) comprising:
- support means (20); and
- a receiving member (21) adapted to carry said article (3) as well as to receive said label (2), and supported by said support means (20) in a translational and rotational manner with respect to a unit axis (F);
wherein said receiving member (21) is movable along said unit axis (F) between:
- a raised position, in which said receiving member (21) axially protrudes from said support means (20), carrying said article (3) on its top portion (22) and is adapted to receive said label (2) wrapped around its lateral wall (23); and
- a retracted position, in which said receiving member (21) is housed within said support means (20) so as to permit insertion of said article (3) into the label (2) welded in an endless or sleeve configuration;
wherein said lateral wall (23) of said receiving member (21) comprises first suction means (41) cooperating in use with a leading edge (45) of the label (2) during wrapping thereof around the receiving member (21) itself, and second suction means (39, 42, 40) cooperating in use with a remaining part (46, 47, 48) of the label (2) during said wrapping;
**characterized in that**, during wrapping of said label (2) around said receiving member (21), said first suction means (41) are activated prior to said second suction means (39, 42, 40) to maximize the retention force on said leading edge (45) of said label (2) at the beginning of the transfer of the latter onto said receiving member (21).

2. The labelling unit as claimed in claim 1, further comprising control means (51) to activate said first suction means (41) prior to said second suction means (39, 42, 40) during wrapping of said label (2) around said receiving member (21) so as to maximize the retention force on said leading edge (45) of said label (2) at the beginning of the transfer of the latter onto said receiving member (21).

3. The labelling unit as claimed in claim 2, wherein said control means (51) comprise a distribution member (52) connected to a suction source, carried by said support means (20) in a fixed angular position with respect to said unit axis (F) and in turn comprising:
- first supplying means (53) connected to said first suction means (41) in any angular position of said receiving member (21) about said unit axis (F); and
- second supplying means (54) progressively and selectively connected in use to said second suction means (39, 42, 40) as a result of the rotation of said receiving member (21) about said unit axis (F) and with respect to said distribution member (52) starting from a condition in which said leading edge (45) of said label (2) has completed its adhesion onto the portion (37) of said lateral wall (23) of said receiving member (21) provided with said first suction means (41).

4. The labelling unit as claimed in claim 3, wherein said distribution member (52) is arranged at the base of said receiving member (21), and wherein said receiving member (21) is angularly movable with respect to said distribution member (52) about said unit axis (F) and is displaceable together with said distribution member (52) along said unit axis (F).

5. The labelling unit as claimed in claim 3 or 4, wherein said first supplying means (53) comprise an annular first outlet groove (55) provided on top of said distribution member (52), and wherein said first suction means (41) comprise at least a first inlet mouth (49a) formed in said receiving member (21) and movable along and above said first outlet groove (55) during rotation of said receiving member (21) about said unit axis (F).

6. The labelling unit as claimed in any one of the claims 3 to 5, wherein said first suction means comprise a first suction region (41) provided in the portion (37) of the lateral wall (23) of the receiving member (21) cooperating in use with the leading edge (45) of the label (2), and wherein said second suction means comprise a plurality of second suction regions (39, 42, 40), angularly spaced from one another and from said first suction region (41) with respect to said unit axis (F) and adapted to cooperate in use with corresponding portions (46, 47, 48) of said label (2) other than said leading edge (45).

7. The labelling unit as claimed in claim 6, wherein said second suction regions (39, 42, 40) are progressively and selectively activated as they cooperate with corresponding portions (46, 47, 48) of said label during wrapping thereof around said receiving member (21).

8. The labelling unit as claimed in claim 7, wherein, during wrapping of said label (2) around said receiving member (21), each of said second suction regions (39, 42, 40) is deactivated as the next first or second suction region (41, 39, 42, 40) in the rotational direction starts to cooperate with the corresponding portion (45, 46, 47, 48) of the label (2).

9. The labelling unit as claimed in any one of the foregoing claims, wherein said lateral wall (23) of said receiving member (21) comprises a label receiving portion (34) having an oval section orthogonally to said unit axis (F).

10. The labelling unit as claimed in claim 8, wherein said label receiving portion (34) of said lateral wall (23) of said receiving member (21) comprises a first edge portion (37) having a curved and convex shape and adapted to cooperate in use with the leading edge (45) of said label (2), an opposite second edge portion (38) also having a curved and convex shape, a first side portion (35) and a second opposite side portion (36), both having curved and convex shapes; wherein said first suction region (41) is formed into said first edge portion (37); and wherein said second suction regions (42, 39, 40) are respectively formed into said second edge portion (38) and said first and second side portion (35, 36) of the lateral wall (23) of said receiving member (21).

11. The labelling unit as claimed in any one of claims 6 to 10, wherein said second supplying means (54) comprise one or more arc-shaped second outlet grooves (58, 59) provided on top of said distribution member (52) and having angular extensions about said unit axis (F) smaller than that of said first outlet groove (55); and wherein said second suction means comprise a plurality of second inlet mouths (49a) formed in said receiving member (21), connected to respective second suction regions (39, 42, 40) and movable along and above the respective said second outlet grooves (58, 59) as said second suction regions (39, 42, 40) respectively cooperate with corresponding portions (46, 47, 48) of said label (2) during wrapping thereof around said receiving member (21).

12. The labelling unit as claimed in any one of claims 3 to 11, wherein said support means comprises a hollow supporting mount (20) carrying said distribution member (52) in a sliding manner along said unit axis (F) and said receiving member (21) in a translational and rotational manner with respect to said unit axis (F).

13. A labelling machine comprising a plurality of labelling units, as claimed in any one of the foregoing claims, and a conveying device (7) for moving said labelling units (15) along a given path (P) orthogonal to the unit axis (F) of each labelling unit (15).

## Patentansprüche

1. Etikettiereinheit (15) zum Aufbringen eines Etiketts (2) auf einen Artikel (3); wobei die Etikettiereinheit (15) umfasst:
- eine Trägereinrichtung (20); und
- ein Aufnahmeelement (21), das so ausgebildet ist, dass dieses den Artikel (2) trägt und auch das Etikett (2) aufnimmt, und das durch die Trägereinrichtung (20) in einer translatorischen und drehenden Weise in Bezug auf eine Achse (F) der Einheit getragen wird;
wobei das Aufnahmeelement (21) entlang der Einheitenachse (F) bewegbar ist, zwischen:
- einer angehobenen Position, in welcher das Aufnahmeelement (21) axial von der Trägereinrichtung (20) vorsteht, den Artikel (3) auf seinem oberen Bereich (22) trägt und so ausgebildet ist, dass dieses das Etikett (2) um seine Seitenwand (23) herumgewickelt erhält; und
- einer zurückgezogenen Position, in welcher das Aufnahmeelement (21) innerhalb der Trägereinrichtung (20) aufgenommen ist, um so eine Einführung des Artikels (3) in das Etikett (2) zu erlauben, dass in einer Endlos-oder Schleifenkonfiguration verschweißt ist;
wobei die Seitenwand (23) des Aufnahmeelements (21) eine erste Saugeinrichtung (41) umfasst, die bei Benutzung mit einer Vorderkante (45) des Etiketts (2) während eines Herumwickelns um das Aufnahmeelement (21) herum zusammenwirkt, und eine zweite Saugeinrichtung (39, 42, 40), die bei Benutzung mit einem verbleibenden Teil (46, 47, 48) des Etiketts (2) während des Wickelns zusammenwirkt;
**dadurch gekennzeichnet, dass** während des Wickelns des Etiketts (2) um das Aufnahmeelement (21) die erste Saugeinrichtung (41) vor der zweiten Saugeinrichtung (39, 42, 40) aktiviert ist, um die Haltekraft auf die Vorderkante (45) des Etiketts (2) am Beginn der Übertragung des letzteren auf das Aufnahmeelement (45) zu maximieren.

2. Etikettiereinheit nach Anspruch 1, ferner mit einer Steuereinrichtung (51), um die erste Saugeinrichtung (41) vor der zweiten Saugeinrichtung (39, 42, 40) während des Wickelns des Etiketts (2) um das Aufnahmeelement (21) herum zu aktivieren, um so die Haltekraft auf die Vorderkante (45) des Etiketts (2), am Beginn der Übertragung des Letzteren, auf das Aufnahmeelement (21) zu maximieren.

3. Etikettiereinheit nach Anspruch 2, in welcher die Steuereinrichtung (51) ein Verteilungselement (52) umfasst, das mit einer Unterdruckquelle verbunden ist, die durch die Trägereinrichtung (20) in einer festen Winkelposition in Bezug zu der Einheitenachse (F) getragen wird und wiederum umfasst:
- eine erste Zuführeinrichtung (53), die mit der ersten Saugeinrichtung (41) in einer Winkelposition des Aufnahmeelements (21) um die Einheitenachse (F) herum verbunden ist; und
- eine zweite Zuführeinrichtung (54), die fortschreitend und wahlfrei bei Benutzung mit der zweiten Saugeinrichtung (39, 42, 40) verbunden ist, und zwar als ein Ergebnis der Drehung des Aufnahmeelements (21) um die Einheitenachse (F) und in Bezug auf das Verteilungselement (52), ausgehend von einem Zustand, in welchem die Vorderkante (45) des Etiketts (2) seine Anhaftung auf dem Bereich (37) der Seitenwand (23) des mit der ersten Saugeinrichtung (21) versehenen Aufnahmeelements (41) abgeschlossen hat.

4. Etikettiereinheit nach Anspruch 3, in welcher das Verteilungselement (52) an der Basis des Aufnahmeelements (21) angeordnet ist, und in welcher das Aufnahmeelement (21) in Bezug zu dem Verteilungselement (52) um die Einheitenachse (F) winkelmäßig bewegbar ist und zusammen mit dem Verteilungselement (52) entlang der Einheitenachse (F) verschiebbar ist.

5. Etikettiereinheit nach Anspruch 3 oder 4, in welcher die erste Zuführeinrichtung (53) eine erste ringförmige Auslassrinne (55) umfasst, die auf einer Oberseite des Verteilungselements (52) vorgesehen ist, und in welcher die erste Saugeinrichtung (41) wenigstens eine erste Einlassöffnung (49a) umfasst, die in dem Aufnahmeelement (21) ausgebildet ist und während der Drehung des Aufnahmeelements (21) um die Einheitenachse (F) entlang und über die erste Auslassrinne (55) bewegbar ist.

6. Etikettiereinheit nach einem der Ansprüche 3 bis 5, in welcher die erste Saugeinrichtung eine erste Saugregion (41) umfasst, die in dem Bereich (37) der Seitenwand (23) des Aufnahmeelements (21) vorgesehen ist, die bei Benutzung mit der Vorderkante (45) des Etiketts (2) zusammenwirkt, und in welcher die zweite Saugeinrichtung eine Mehrzahl von zweiten Saugregionen (39, 42, 40) umfasst, die winkelmäßig in Abstand voneinander und von der ersten Saugregion (41) in Bezug zur Einheitenachse (F) angeordnet sind und so ausgebildet sind, dass diese bei Benutzung mit anderen korrespondierenden Bereichen (46, 47, 48) des Etiketts (2) als der Vorderkante (45) zusammenwirken.

7. Etikettiereinheit nach Anspruch 6, in welcher die zweiten Saugregionen (39, 42, 40) fortschreitend und wahlfrei aktiviert werden, wenn sie mit korrespondierenden Bereichen (46, 47, 48) des Etiketts zusammenwirken, während dieses um das Aufnahmeelement (21) herum gewickelt wird.

8. Etikettiereinheit nach Anspruch 7, in welcher während des Wickelns des Etiketts (2) um das Aufnahmeelement (21) herum jeder der zweiten Saugbereiche (39, 42, 40) deaktiviert ist, wenn der nächste erste oder zweite Saugbereich (41, 39, 42, 40) in Drehrichtung beginnt, mit dem korrespondierenden Bereich (45, 46, 47, 48) des Etiketts (2) zusammenzuwirken.

9. Etikettiereinheit nach einem der vorhergehenden Ansprüche, in welcher die Seitenwand (23) des Aufnahmeelements (21) ein Etikett-Aufnahmebereich (34) mit einem ovalen Abschnitt senkrecht zur Einheitenachse (F) umfasst.

10. Etikettiereinheit nach Anspruch 8, in welcher der Etikett-Aufnahmebereich (34) der Seitenwand (23) des Aufnahmeelements (21) aufweist einen ersten Kantenbereich (37), der eine gekrümmte und konvexe Form hat und so ausgebildet ist, dass dieser bei Benutzung mit der Vorderkante (45) des Etiketts (2) zusammenwirkt, einen entgegengesetzten zweiten Kantenbereich (38), der auch eine gekrümmte und konvexe Form hat, einen ersten Seitenbereich (35) und einen zweiten entgegengesetzten Seitenbereich (36), die beide gekrümmte und konvexe Formen haben; wobei der erste Saugbereich (41) in dem ersten Kantenbereich (37) ausgebildet ist; und wobei die zweiten Saugbereiche (42, 39, 40) jeweils in dem zweiten Kantenbereich (38) und dem ersten und zweiten Seitenbereich (36, 36) der Seitenwand (23) des Aufnahmeelements (21) ausgebildet sind.

11. Etikettiereinheit nach einem der Ansprüche 6 bis 10, in welcher die zweite Zuführeinrichtung (54) ein oder mehrere bogenförmige zweite Auslassrinnen (58, 59) umfasst, die auf der Oberseite des Verteilungselements (52) vorgesehen sind und ringförmige Erstreckungen um die Einheiten (F) haben, die kleiner sind, als die der ersten Auslassrinne (55); und wobei die zweite Saugeinrichtung eine Mehrzahl von zweiten Einlassöffnungen (49a) umfasst, die in dem Aufnahmeelement (21) ausgebildet sind, mit jeweiligen zweiten Saugbereichen (39, 42, 40) verbunden sind und entlang und über die jeweiligen zweiten Auslassrinnen (58, 59) bewegbar sind, wenn die zweiten Saugbereiche (39, 42, 40) jeweils mit korrespondierenden Bereichen (46, 47, 48) des Etiketts (2) zusammenwirken, während dieses um das Aufnahmeelement (21) herumgewickelt wird.

12. Etikettiereinheit nach einem der Ansprüche 3 bis 11, in welcher die Trägereinrichtung einen hohlen Halter (20) umfasst, der das Verteilungselement (52) in einer gleitenden Weise entlang der Einheitenachse (F) und das Aufnahmeelement (21) in einer translatorischen und drehenden Weise in Bezug zu der Einheitenachse (F) trägt.

13. Etikettiermaschine mit einer Mehrzahl von Etikettiereinheiten nach einem der vorhergehenden Ansprüche und einer Fördereinrichtung (7) zum Bewegen der Etikettiereinheiten (15) entlang eines gegebenen Weges (P) senkrecht zu der Einheitenachse (F) jeder Etikettiereinheit (15).

## Revendications

1. Unité d'étiquetage (15) destinée à appliquer une étiquette (2) sur un article (3) ; ladite unité d'étiquetage (15) comprenant :
- un moyen de support (20) ; et
- un élément de réception (21) adapté pour porter ledit article (3) et pour recevoir ladite étiquette (2), et supporté par ledit moyen de support (20) de manière translationnelle et rotationnelle par rapport à un axe (F) ;
dans laquelle ledit élément de réception (21) peut se déplacer le long dudit axe (F) entre :
- une position soulevée, dans laquelle ledit élément de réception (21) sort axialement dudit moyen de support (20), qui porte ledit article (3) sur sa partie supérieure (22) et est adapté pour recevoir ladite étiquette (2) enroulée autour de sa paroi latérale (23) ; et
- une position rétractée, dans laquelle ledit élément de réception (21) est contenu dans ledit moyen de support (20) de façon à permettre l'insertion dudit article (3) dans l'étiquette (2) soudée selon une configuration sans fin ou en chemise ;
dans laquelle ladite paroi latérale (23) dudit élément de réception (21) comprend un premier moyen d'aspiration (41) qui coopère avec un bord avant (45) de l'étiquette (2) pendant son enroulement autour de l'élément de réception (21) lui-même, et un second moyen d'aspiration (39, 42, 40) qui coopère avec une partie restante (46, 47, 48) de l'étiquette (2) pendant ledit enroulement ;
**caractérisé en ce que**, pendant l'enroulement de ladite étiquette (2) autour dudit élément de réception (21), ledit premier moyen d'aspiration (41) est activé avant ledit second moyen d'aspiration (39, 42, 40) afin de maximiser la force de retenue sur ledit bord avant (45) de ladite étiquette (2) au début du transfert de cette dernière vers ledit élément de réception (21).

2. Unité d'étiquetage selon la revendication 1, qui comprend en outre un moyen de commande (51) destiné à activer ledit premier moyen d'aspiration (41) avant ledit second moyen d'aspiration (39, 42, 40) pendant l'enroulement de ladite étiquette (2) autour dudit élément de réception (21) de façon à maximiser la force de retenue sur ledit bord avant (45) de ladite étiquette (2) au début du transfert de cette dernière vers ledit élément de réception (21).

3. Unité d'étiquetage selon la revendication 2, dans laquelle ledit moyen de commande (51) comprend un élément de distribution (52) relié à une source d'aspiration, porté par ledit moyen de support (20) dans une position angulaire fixe par rapport audit axe (F), et qui comprend à son tour :
- un premier moyen d'alimentation (53) relié audit premier moyen d'aspiration (41) dans n'importe quelle position angulaire dudit élément de réception (21) autour dudit axe (F) ; et
- un second moyen d'alimentation (54) progressivement et sélectivement relié audit second moyen d'aspiration (39, 42, 40) à la suite de la rotation dudit élément de réception (21) autour dudit axe (F) et par rapport audit élément de distribution (52) en partant d'une condition selon laquelle ledit bord avant (45) de ladite étiquette (2) a adhéré à la partie (37) de ladite paroi latérale (23) dudit élément de réception (21) muni dudit premier moyen d'aspiration (41).

4. Unité d'étiquetage selon la revendication 3, dans laquelle ledit élément de distribution (52) est prévu au niveau de la base dudit élément de réception (21), et dans laquelle ledit élément de réception (21) peut se déplacer angulairement par rapport audit élément de distribution (52) autour dudit axe (F), et est déplaçable avec ledit élément de distribution (52) le long dudit axe (F).

5. Unité d'étiquetage selon la revendication 3 ou 4, dans laquelle ledit premier moyen d'alimentation (53) comprend une première rainure de sortie annulaire (55) prévue au sommet dudit élément de distribution (52), et dans laquelle ledit premier moyen d'aspiration (41) comprend au moins une première embouchure d'entrée (49a) formée dans ledit élément de réception (21) et capable de se déplacer le long et au-dessus de ladite première rainure de sortie (55) pendant la rotation dudit élément de réception (21) autour dudit axe (F).

6. Unité d'étiquetage selon l'une quelconque des revendications 3 à 5, dans laquelle ledit premier moyen d'aspiration comprend une première zone d'aspiration (41) prévue dans la partie (37) de la paroi latérale (23) de l'élément de réception (21) qui coopère avec le bord avant (45) de l'étiquette (2), et dans laquelle ledit second moyen d'aspiration comprend une pluralité de secondes zones d'aspiration (39, 42, 40), espacées angulairement les unes des autres et de ladite première zone d'aspiration (41) par rapport audit axe (F), et adaptées pour coopérer avec des parties correspondantes (46, 47, 48) de ladite étiquette (2) différentes dudit bord avant (45).

7. Unité d'étiquetage selon la revendication 6, dans laquelle lesdites secondes zones d'aspiration (39, 42, 40) sont progressivement et sélectivement activées lorsqu'elles coopèrent avec des parties correspondantes (46, 47, 48) de ladite étiquette pendant l'enroulement de celle-ci autour dudit élément de réception (21).

8. Unité d'étiquetage selon la revendication 7, dans laquelle, pendant l'enroulement de ladite étiquette (2) autour dudit élément de réception (21), chacune desdites secondes zones d'aspiration (39, 42, 40) est désactivée dès que la première ou la seconde zone d'aspiration suivante (41, 39, 42, 40), dans la direction de rotation, commence à coopérer avec la partie correspondante (45, 46, 47, 48) de l'étiquette (2).

9. Unité d'étiquetage selon l'une quelconque des revendications précédentes, dans laquelle ladite paroi latérale (23) dudit élément de réception (21) comprend une partie de réception d'étiquette (34) qui possède une section ovale orthogonale par rapport audit axe (F).

10. Unité d'étiquetage selon la revendication 8, dans laquelle ladite partie de réception d'étiquette (34) de ladite paroi latérale (23) dudit élément de réception (21) comprend une première partie de bord (37) qui possède une forme courbe et convexe, et adaptée pour coopérer avec le bord avant (45) de ladite étiquette (2), une seconde partie de bord opposée (38) ayant également une forme courbe et convexe, une première partie latérale (35) et une seconde partie latérale opposée (36) qui possèdent des formes courbes et convexes ; dans laquelle ladite première zone d'aspiration (41) est formée dans ladite première partie de bord (37) ; et dans laquelle lesdites secondes zones d'aspiration (42, 39, 40) sont respectivement formées dans ladite seconde partie de bord (38), et dans lesdites première et seconde parties latérales (35, 36) de la paroi latérale (23) dudit élément de réception (21).

11. Unité d'étiquetage selon l'une quelconque des revendications 6 à 10, dans laquelle ledit second moyen d'alimentation (54) comprend une ou plusieurs seconde(s) rainure(s) de sortie en forme d'arc (58, 59) prévues au sommet dudit élément de distribution (52) et qui possèdent des extensions angulaires autour dudit axe (F), plus petites que celle de ladite première rainure de sortie (55) ; et dans laquelle ledit second moyen d'aspiration comprend une pluralité de secondes embouchures d'entrée (49a) formées dans ledit élément de réception (21), reliées à des secondes zones d'aspiration respectives (39, 42, 40) et capables de se déplacer le long et au-dessus desdites secondes rainures de sortie respectives (58, 59) dès que lesdites secondes zones d'aspiration (39, 42, 40) coopèrent respectivement avec des parties correspondantes (46, 47, 48) de ladite étiquette (2) pendant l'enroulement de celle-ci autour dudit élément de réception (21).

12. Unité d'étiquetage selon l'une quelconque des revendications 3 à 11, dans laquelle ledit moyen de support comprend un support creux (20) qui porte ledit élément de distribution (52) de manière coulissante le long dudit axe (F) et ledit élément de réception (21) de manière translationnelle et rotationnelle par rapport audit axe (F).

13. Machine d'étiquetage qui comprend une pluralité d'unités d'étiquetage selon l'une quelconque des revendications précédentes, et un dispositif de transport (7) destiné à déplacer lesdites unités d'étiquetage (15) le long d'un trajet donné (P) orthogonal par rapport à l'axe (F) de chaque unité d'étiquetage (15).
